# EUROPEAN PATENT APPLICATION

(11) **EP 4 588 758 A1**
(43) Date of publication of application: **23.07.2025**
(21) Application number: 24153241.5
(22) Date of filing: 22.01.2024
(51) Int. Cl.: B62D 21/02, B62D 21/15

(54) **VEHICLE FRONTAL STRUCTURE**

(71) Applicant: Volvo Truck Corporation, 405 08 Göteborg (SE)
(72) Inventor: VALLE, Miguel, KERNERSVILLE, 27284 (US); SOHAL, Satbir, 410210 NAVI MUMBAI (IN); BIJLANI, Nikhilesh, BERMUDA RUN, 27006 (US); PILLAI, Rajiv, 560093 BANGALORE (IN); GELGOT, Stephen, STOKESDALE, 27357 (US)
(74) Representative: Lavoix

(57) **Abstract**

Assembly (10, 12) for absorbing impact energy, the assembly comprising: a beam (10) configured to be fixed in a vertical orientation (Z) to a chassis frame (7) of a vehicle (1); a single-piece tube assembly (12) comprising: an upper plate (14) fixed to the beam (10); an upper tube section (16) welded to the upper plate (14); an intermediate tube section (20) angled with respect to the upper tube section (16); a lower tube section (24) angled with respect to the intermediate tube section (20); and a lower plate (26) welded to the lower section (24) and configured to be fixed to the chassis frame (7), wherein the upper tube section (16), the intermediate tube section (20) and the lower tube section (24) are straight.

## Description

### Technical Field

This disclosure pertains to an impact energy absorbing assembly for a vehicle and in particular for a heavy vehicle.

### Background Art

Various structures or designs have been used to absorb impact energy at the front or rear of vehicles. For example, document US 6,056,337 A discloses a pair of pipes arranged at the front of a truck and configured to be deformed upon impact. In the event of a small impact, the pipes are only partially deformed, and the airbag is not triggered. Upon a serious impact, the pipes are fully deformed, and the airbag explosion is triggered.

As the vehicles become heavier due to various safety regulations or due to changes in the driving technology (e.g., batteries for electric motors), the energy of an impact is becoming greater.

There is therefore a need to provide shock energy absorbing structures which are lightweight though provide for a higher amount of energy to be absorbed.

### Summary

This disclosure improves the situation.

The disclosure relates to an assembly for absorbing impact energy, the assembly comprising: a beam configured to be fixed in a vertical orientation to a chassis frame of a vehicle; a single-piece tube assembly comprising: an upper plate fixed to the beam; an upper tube section welded to the upper plate; an intermediate tube section angled with respect to the upper tube section; an upper curved tube section connecting the upper tube section to the intermediate tube section; a lower tube section angled with respect to the intermediate tube section; a lower curved tube section connecting the intermediate tube section to the lower tube section; and a lower plate welded to the lower section and configured to be fixed to a chassis frame, wherein the upper tube section, the intermediate tube section and the lower tube section are straight. The tube sections may have a circular cross-section.

The use of a three-straight-sections circular cross-section tube assembly, with angular transitions enables to create predetermined location of weakness along the tube assembly. The tube assembly acts as a deformable part under impact and allows for a better conservation of the integrity of the structure.

In another aspect, a longitudinal axis of the upper tube section and a longitudinal axis of the beam define a reference plane, and wherein the intermediate section is angled away from the reference plane by a first transversal angle and the lower tube section is angled away from the reference plane by a second transversal angle greater than the first transversal angle.

The fact that the assembly is not contained in a single reference plane enables to predetermine an orientation for the deformation of the tube assembly (left or right when the shock absorbing assembly is mounted in the truck). This avoids the tube assembly to move up or down under impact, but rather to deform laterally, thereby having the space to absorb more energy.

In another aspect, the first transversal angle is comprised between 1 and 5° and/or the second transversal angle is comprised between 5° and 10°.

A too great angle would diminish the ability to absorb energy as the tube assembly would not sufficiently oppose the force of an impact. A too small angle would be unsignificant and would make the tube assembly deform vertically.

In another aspect, a longitudinal axis of the upper tube section and a longitudinal axis of the beam define a reference plane, and wherein projected in the reference plane, the intermediate section is angled with respect to the upper tube section by an upper angle and the lower tube section is angled with respect to the upper tube section by a lower angle greater than the upper angle.

In another aspect, the upper angle is comprised between 100 and 130° and/or the lower angle is comprised between 120° and 160°.

These two angles enable an accordion effect, as in extreme cases, the tube assembly is deformed such that the intermediate tube section is almost vertical, while the upper and lower tube sections are oblique.

In another aspect, the beam has a rectangular or square cross-section, a width of the rectangular or square section being comprised between 60 mm and 100 mm.

The beam is thus adequately dimensioned to have a limited deformation (if any) in the event of a small impact.

In another aspect, the upper tube section extends perpendicularly to the upper plate.

This arrangement enables to avoid points of weakness at the connection between the tube, the upper plate and the beam, thereby enabling a stronger shock absorption capacity.

In another aspect, the lower tube section is at least two times longer than the upper tube section and/or the lower tube section is at least 1.5 times longer than the intermediate tube section.

This design, where the frontmost section of the tube is longer than other sections enable to provide the most deformation (and shock absorption) at the frontmost side of the vehicle, thereby protecting other parts of the vehicle.

In another aspect, the bottom plate comprises a central plate portion perpendicular to a longitudinal direction of the beam, an inner plate portion extending from and perpendicular to the central plate portion, and an external tab extending from and perpendicular to the central plate portion, the external tab extending in an opposite direction than the inner plate portion.

Irrespective of the main direction of impact, this design will enable to transmit energy to the tube.

In another aspect, the lower tube section is welded to the central plate portion. Alternatively, the lower tube section is welded to the inner plate portion or to the external tab.

In another aspect, the upper tube section, the upper curved tube section, the intermediate tube section, the lower curved tube section and the lower tube section are formed by bending a single tube.

This design enables to properly control the location of the points of weakness along the tube, because in contrast when a tube is made by assembling several pieces, each connection between two pieces may be a point of weakness and there may not be a homogeneity along the tube (material or cross-section may be slightly different).

In another aspect, the upper tube section, the upper curved tube section, the intermediate tube section, the lower curved tube section and the lower tube section have a circular cross-section of a diameter that is comprised between 20 mm and 60 mm, and they are preferably hollow having an inner diameter comprised between 18 and 50 mm.

In another aspect, the beam has two fixing brackets for fixing the beam to the chassis frame. The fixing brackets may sandwich the beam and may extend over at least a third of its height to adequately maintain the beam in position.

The disclosure also relates to a long-bonnet heavy vehicle comprising: a chassis frame; and at least two assemblies for absorbing impact energy according to any of the embodiments described above, the beams of the two assemblies being fixed to a respective portion of the chassis frame and the lower plate of the two assemblies being fixed to a respective chassis frame.

In another aspect, the bottom plate of each assembly comprises a central plate portion arranged horizontally and an inner plate portion arranged vertically, and the inner plate portion is closer to a central longitudinal axis of the vehicle than the central plate portion is.

### Brief Description of Drawings

Other features, details and advantages will be shown in the following detailed description and on the figures, on which:
FIG. 1 is a schematic view of a truck.
FIG. 2 shows an assembly for absorbing impact energy.
FIG. 3 shows the assembly of FIG. 2 in a different view.
FIG. 4 shows a top view of the assembly of figure 2.
FIG. 5 shows a magnified view of the axes.
FIG. 6 shows a side view of the assembly of figure 2.
FIG. 7 shows the cross-section of the beam 10.
FIG. 8 shows an example of deformation of the assembly of figure 2 upon impact.

### Description of Embodiments

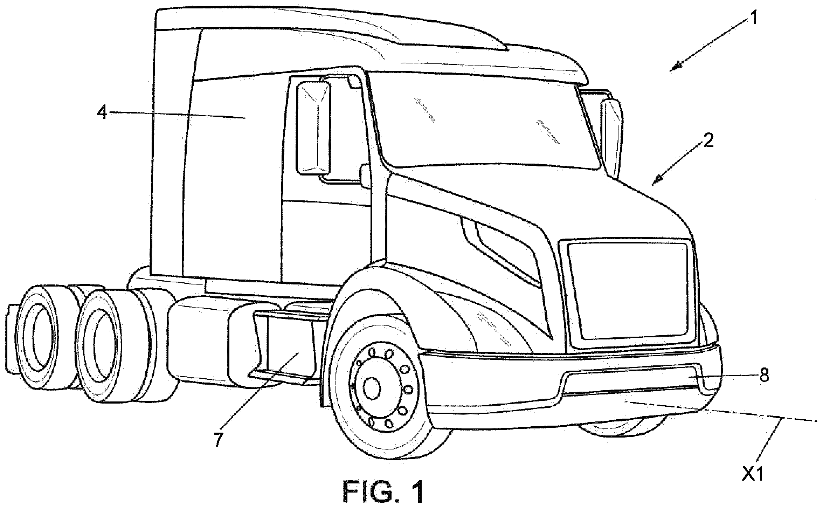

Figure 1 shows an example of an implementation of the invention, i.e., a long-bonnet truck 1. The truck 1 has a long bonnet 2 where at least part of the drivetrain may be housed, such as an internal combustion engine, an electric motor, or a hybrid driving system.

The truck 1 may have a cabin 4 laying on a chassis frame 7. A front bumper 8 is intended to absorb part of the energy in the event of an impact.

The axis X1 designates a central longitudinal axis of the truck 1.

The long-bonnet heavy vehicle 1 is only an example of implementation of the present disclosure, and the teachings of the present disclosure can be adapted to any road or rail vehicle, of any size or nature.

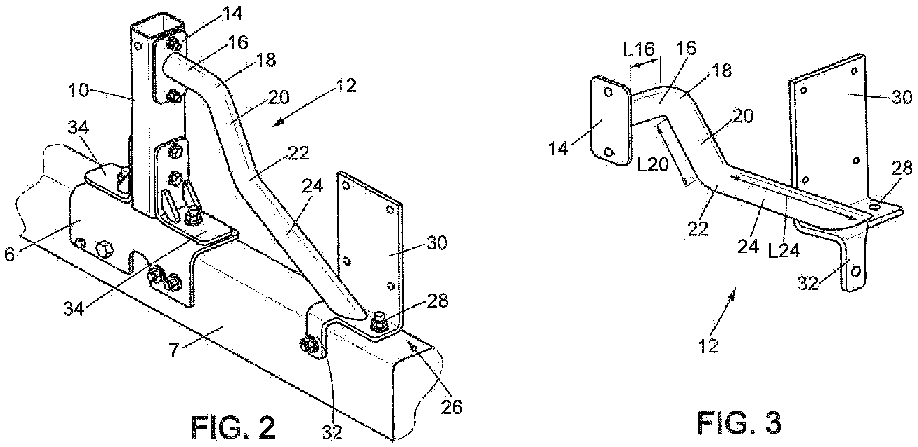

FIG. 2 shows an assembly for absorbing impact energy. In essence, the assembly comprises two main elements, a beam 10 and a single-piece tube assembly 12. The beam 10 may be fixed to the chassis frame 7 of the vehicle 1 such that the orientation of the beam 10 is vertical. An intermediate plate 6 having a L-shaped profile may be interposed between the beam 10 and the chassis frame 7. The single-piece tube assembly 12 is attached to the beam 10 and is intended to deform upon impact, so as to absorb impact energy.

The single-piece tube assembly 12 comprises an upper plate 14 which is fixed to the beam. In the illustrated example, the upper plate 14 is screwed to the beam 10. The upper plate 14 may be substantially flat and may have a width that is equal or smaller than a width of the beam 10.

The single-piece assembly 12 comprises a three-section bent tube, composed of an upper tube section 16, an upper curved tube section 18, an intermediate tube section 20, a lower curved tube section 22 and a lower tube section 24. The upper tube section 16, the intermediate tube section 20 and the lower tube section 24 are straight and are connected together by means of the curved tube sections 18, 22.

The upper tube section 16 may be welded to the upper plate 14. Other fixation means may alternatively be foreseen.

FIG. 3 shows the assembly of FIG. 2 in a different view.

The lengths of the sections 16, 20, 24 are noted L16, L20, L24 respectively. The lower tube section 24 is substantially longer than the upper and intermediate sections. For example, L24 is at least two times L16 and/or at least 1.5 times L20. The intermediate tube may be longer than the upper tube. In some examples, L16 is comprised between 20 mm and 200 mm, L20 is comprised between 30 mm and 300 mm and L24 is comprised between 40 mm and 400 mm.

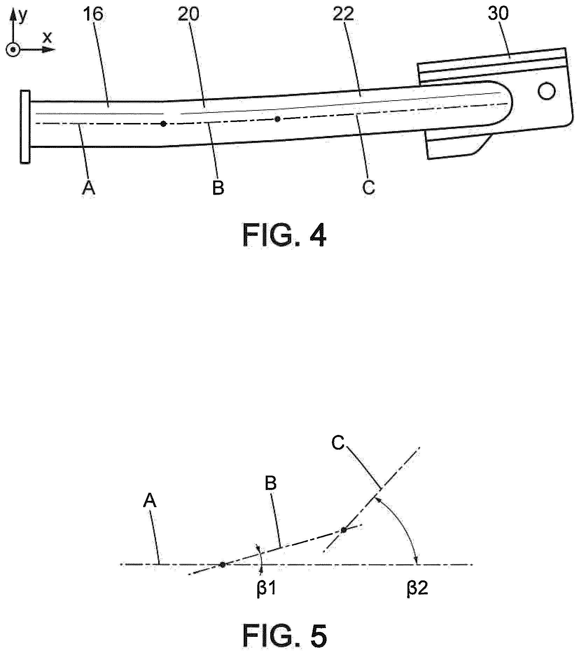

The lower tube section 24 is welded to a lower plate 26 and more specifically to a central plate portion 28 of the lower plate 26. The central plate portion 28 may be horizontal, i.e., perpendicular to the longitudinal direction of the beam 10. The lower plate 26 further comprises an inner plate portion 30 and an external tab 32. The inner plate portion 30 is intended to be positioned on an inner side of the vehicle (i.e., closed to the central axis X1 than are the central plate portion 28 or the tab 32). The tab 32 extends downwardly while the inner plate portion extends upwardly. An opposite configuration is also possible, depending on the design of the chassis frame. At least one of the central plate portion 28, the inner plate portion 30 and the external tab 32 is connected to the chassis frame 7, directly or indirectly. The external tab 32 may be substantially smaller than the inner plate portion 30: the external tab 32 may have a vertical height less than a third of the inner plate portion's height, and/or a width (seen as on fig.4 horizontal dimension) that is less than half of the width of the inner plate portion.

Fixing brackets 34 can be used to firmly connect the beam 10 to the chassis frame 7 through the intermediate plate 6. The fixing brackets 34 may sandwich the beam 10 and hold it on the front and rear side. The lateral sides of the beam 10 may be free of fixing brackets.

FIG. 4 shows a top view of the single-piece tube assembly. The central axis A of the upper tube section 16 is substantially aligned with the longitudinal direction X. The upper tube section 16 is substantially perpendicular to the upper plate 14. The intermediate tube section 20 is slightly angled away from the axis X (or away from a reference plane defined by the beam and the upper tube section).

As noted on FIG. 5, the central axis B of the intermediate tube section 20 can form with the central axis A a first transversal angle noted β1 which may be comprised between 1° and 5° (the angles are amplified on FIG. 5 in comparison to FIG. 4 for clarity). The central axis C of the lower tube section 24 is angled further away from the axis X. The second transversal angle β2 between A and C may be comprised between 0° and 10°.

The inner plate portion 30 and/or the external tab 32 can be arranged parallel to the axis C.

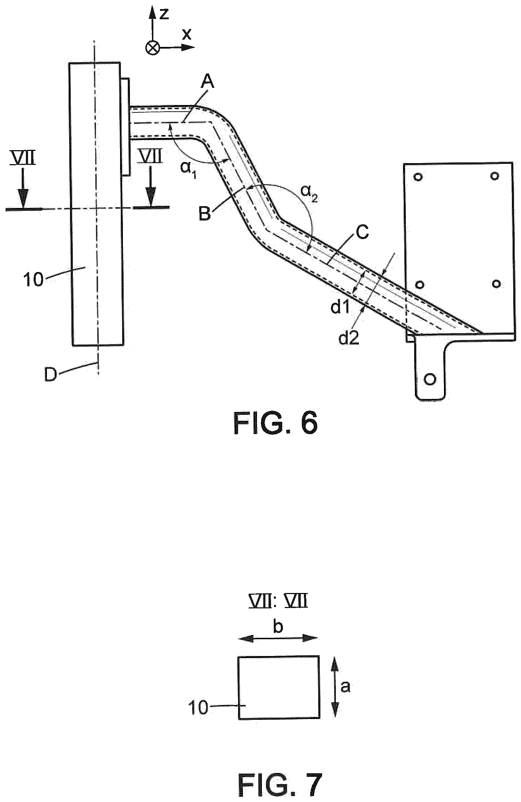

FIG. 6 shows a side view of the same assembly. The longitudinal direction of the beam 10 is noted D. It is arranged vertically when the assembly is mounted on the chassis frame of the truck.

The cross-section VII/VII represented on FIG. 7 shows that the beam may have a rectangular cross section, with dimensions a and b comprised between 20 mm and 100 mm. The beam 10 may be hollow.

The tube assembly is formed by bending a tube which may have an inner diameter D1 comprised between 18 mm and 50 mm and/or may have an outer diameter comprised between 20 mm and 60 mm. Alternatively, the tube may be a bent bar (i.e. not hollow).

The external diameter d2 of the tube sections may be preferably comprised between 40% and 60% of the lateral dimension a of the beam 10. The surface area of the cross section of the tube sections (π*(d2/2)²) may be less than a third of the surface area of the beam's cross-section (a*b).

Figure 6 also shows the inclination of the various tube sections. The intermediate tube section 20 may be angled downwardly. The upper angle α1 between the central axis A of the upper tube section 16 and the central axis B of the intermediate tube section 20 (when seen in the projected view in the plane (X, Z), or (A, D)) may be comprised between 100 and 130°. The lower angle α2, between the central axis C of the lower tube section and the central axis B of the intermediate tube section may be comprised between 120° and 160°.

In some examples, the lengths of the tube sections and the angles are chosen so that the central plate portion 28 is substantially aligned with a lower end of the beam 10.

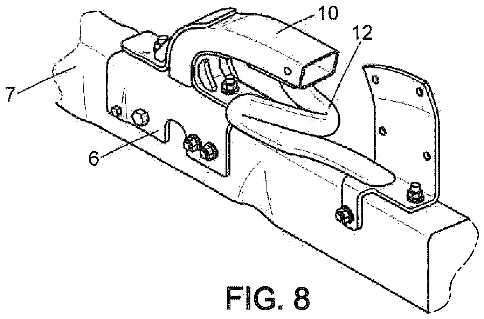

Figure 8 shows a view of the assembly for absorbing impact energy as presented in the previous figures.

Upon a frontal impact, the beam may be hit, e.g. by the upper barrier. The beam folds and the single-piece tube assembly crumbles. The curved tube sections may operate as weakness points encouraging the straight tube sections to fold and crumble.

### Reference Signs List

1: Truck
2: long bonnet
4: cabin
6: intermediate plate
7: chassis frame
8: bumper
10: beam
12: single-piece tube assembly
14: upper plate
16: upper tube section
18: upper curved tube section
20: intermediate tube section
22: lower curved tube section
24: lower tube section
26: lower plate
28: central plate portion of the lower plate
30: inner plate portion of the lower plate
32: external tab of the lower plate
34: fixing brackets
A: central axis of the upper tube section 16
B: central axis of the intermediate tube section 20
C: central axis of the lower tube section 24
D: central axis of the beam 10
a, b: width and thickness of the beam 10
L16, L20, L24: lengths of the tube sections
d1, d2: inner and outer diameter of the tube sections
α1, α2: angles of the tube sections in a side view
β1, β2: angles of the tube sections in a top view.

## Claims

1. Assembly (10, 12) for absorbing impact energy, the assembly comprising:
a beam (10) configured to be fixed in a vertical orientation (Z) to a chassis frame (7) of a vehicle (1);
a single-piece tube assembly (12) comprising:
an upper plate (14) fixed to the beam (10);
an upper tube section (16) welded to the upper plate (14);
an intermediate tube section (20) angled with respect to the upper tube section (16);
an upper curved tube section (18) connecting the upper tube section (16) to the intermediate tube section (20);
a lower tube section (24) angled with respect to the intermediate tube section (20);
a lower curved tube section (22) connecting the intermediate tube section (20) to the lower tube section (24); and
a lower plate (26) welded to the lower section (24) and configured to be fixed to the chassis frame (7),
wherein the upper tube section (16), the intermediate tube section (20) and the lower tube section (24) are straight.

2. Assembly (10, 12) according to claim 1, wherein a longitudinal axis (A) of the upper tube section (16) and a longitudinal axis (D) of the beam (10) define a reference plane (A,D), and wherein the intermediate section (20) is angled away from the reference plane (A, D) by a first transversal angle (β1) and the lower tube section (24) is angled away from the reference plane (A,D) by a second transversal angle (β2) greater than the first transversal angle (β1).

3. Assembly (10, 12) according to the preceding claim, wherein the first transversal angle (β1) is comprised between 1 and 5° and/or the second transversal angle (β2) is comprised between 5° and 10°.

4. Assembly (10, 12) according to any of claims 1 to 3, wherein a longitudinal axis (A) of the upper tube section (16) and a longitudinal axis (D) of the beam (10) define a reference plane, (A,D) and wherein projected in the reference plane, the intermediate section (20) is angled with respect to the upper tube section (16) by an upper angle (α1) and the lower tube section (24) is angled with respect to the upper tube section (16) by a lower angle (α2) greater than the upper angle (α1).

5. Assembly (10, 12) according to the preceding claim, wherein the upper angle (α1) is comprised between 100 and 130° and/or the lower angle (α2) is comprised between 120° and 160°.

6. Assembly (10, 12) according to any of claims 1 to 4, wherein the beam (10) has a rectangular or square cross-section, a width (a, b) of the rectangular or square section being comprised between 20 mm and 100 mm.

7. Assembly (10, 12) according to any of claims 1 to 6, wherein the upper tube section (16) extends perpendicularly to the upper plate (14).

8. Assembly (10, 12) according to any of claims 1 to 7, wherein the lower tube section (24) is at least two times longer than the upper tube section (16) and/or the lower tube section (24) is at least 1.5 times longer than the intermediate tube section (20).

9. Assembly (10, 12) according to any of claims 1 to 8, wherein the bottom plate (26) comprises a central plate portion (28) perpendicular to a longitudinal direction (D) of the beam (10), an inner plate portion (30) extending from and perpendicular to the central plate portion (28), and an external tab (32) extending from and perpendicular to the central plate portion (28), the external tab (32) extending in an opposite direction than the inner plate portion (30.

10. Assembly (10, 12) according to the preceding claim, wherein the lower tube section (24) is welded to the central plate portion (28).

11. Assembly (10, 12) according to any of claims 1 to 10, wherein the upper tube section (16), the upper curved tube section (18), the intermediate tube section (20), the lower curved tube section (22) and the lower tube section (24) are formed by bending a single tube.

12. Assembly (10, 12) according to any of claims 1 to 11, wherein the upper tube section (16), the upper curved tube section (18), the intermediate tube section (20), the lower curved tube section (22) and the lower tube section (24) have a circular cross-section of a diameter (d2) that is comprised between 20 mm and 60 mm, and they are preferably hollow having an inner diameter (d1) comprised between 18 and 50 mm.

13. Assembly (10, 12) according to any of claims 1 to 12, wherein the beam (10) has two fixing brackets (34) for fixing the beam (10) to the chassis frame (7).

14. A long-bonnet heavy vehicle (1) comprising:
a chassis frame (7); and
at least two assemblies (10, 12) for absorbing impact energy according to any of the preceding claims, the beams (10) of the two assemblies (10, 12) being fixed to respective portions of the chassis frame (7) and the lower plate (26) of the two assemblies (10, 12) being fixed to respective portions of the chassis frame (7).

15. The long-bonnet heavy vehicle (1) of claim 14, wherein the bottom plate (26) of each assembly (10, 12) comprises a central plate portion (28) arranged horizontally and an inner plate portion (30) arranged vertically, and the inner plate portion (30) is closer to a central longitudinal axis (X1) of the vehicle (1) than the central plate portion (28) is.

## Amended claims

### Amended claims in accordance with Rule 137(2) EPC.

1. Assembly (10, 12) for absorbing impact energy, the assembly comprising:
- a beam (10) configured to be fixed in a vertical orientation (Z) to a chassis frame (7) of a vehicle (1);
- a single-piece tube assembly (12) comprising:
• an upper plate (14) fixed to the beam (10);
• an upper tube section (16) welded to the upper plate (14);
• an intermediate tube section (20) angled with respect to the upper tube section (16);
• an upper curved tube section (18) connecting the upper tube section (16) to the intermediate tube section (20);
• a lower tube section (24) angled with respect to the intermediate tube section (20);
• a lower curved tube section (22) connecting the intermediate tube section (20) to the lower tube section (24); and
• a lower plate (26) welded to the lower tube section (24) and configured to be fixed to the chassis frame (7),
wherein the upper tube section (16), the intermediate tube section (20) and the lower tube section (24) are straight.

2. Assembly (10, 12) according to claim 1, wherein a longitudinal axis (A) of the upper tube section (16) and a longitudinal axis (D) of the beam (10) define a reference plane (A,D), and wherein the intermediate section (20) is angled away from the reference plane (A,D) by a first transversal angle (β1) and the lower tube section (24) is angled away from the reference plane (A,D) by a second transversal angle (β2) greater than the first transversal angle (β1).

3. Assembly (10, 12) according to the preceding claim, wherein the first transversal angle (β1) is comprised between 1 and 5° and/or the second transversal angle (β2) is comprised between 5° and 10°.

4. Assembly (10, 12) according to any of claims 1 to 3, wherein a longitudinal axis (A) of the upper tube section (16) and a longitudinal axis (D) of the beam (10) define a reference plane, (A,D) and wherein projected in the reference plane, the intermediate section (20) is angled with respect to the upper tube section (16) by an upper angle (α1) and the lower tube section (24) is angled with respect to the upper tube section (16) by a lower angle (α2) greater than the upper angle (α1).

5. Assembly (10, 12) according to the preceding claim, wherein the upper angle (α1) is comprised between 100 and 130° and/or the lower angle (α2) is comprised between 120° and 160°.

6. Assembly (10, 12) according to any of claims 1 to 4, wherein the beam (10) has a rectangular or square cross-section, a width (a, b) of the rectangular or square section being comprised between 20 mm and 100 mm.

7. Assembly (10, 12) according to any of claims 1 to 6, wherein the upper tube section (16) extends perpendicularly to the upper plate (14).

8. Assembly (10, 12) according to any of claims 1 to 7, wherein the lower tube section (24) is at least two times longer than the upper tube section (16) and/or the lower tube section (24) is at least 1.5 times longer than the intermediate tube section (20).

9. Assembly (10, 12) according to any of claims 1 to 8, wherein the lower plate (26) comprises a central plate portion (28) perpendicular to a longitudinal direction (D) of the beam (10), an inner plate portion (30) extending from and perpendicular to the central plate portion (28), and an external tab (32) extending from and perpendicular to the central plate portion (28), the external tab (32) extending in an opposite direction than the inner plate portion (30.

10. Assembly (10, 12) according to the preceding claim, wherein the lower tube section (24) is welded to the central plate portion (28).

11. Assembly (10, 12) according to any of claims 1 to 10, wherein the upper tube section (16), the upper curved tube section (18), the intermediate tube section (20), the lower curved tube section (22) and the lower tube section (24) are formed by bending a single tube.

12. Assembly (10, 12) according to any of claims 1 to 11, wherein the upper tube section (16), the upper curved tube section (18), the intermediate tube section (20), the lower curved tube section (22) and the lower tube section (24) have a circular cross-section of a diameter (d2) that is comprised between 20 mm and 60 mm, and they are preferably hollow having an inner diameter (d1) comprised between 18 and 50 mm.

13. Assembly (10, 12) according to any of claims 1 to 12, wherein the beam (10) has two fixing brackets (34) for fixing the beam (10) to the chassis frame (7).

14. A long-bonnet heavy vehicle (1) comprising:
- a chassis frame (7); and
- at least two assemblies (10, 12) for absorbing impact energy according to any of the preceding claims,
the beams (10) of the two assemblies (10, 12) being fixed to respective portions of the chassis frame (7) and the lower plate (26) of the two assemblies (10, 12) being fixed to respective portions of the chassis frame (7).

15. The long-bonnet heavy vehicle (1) of claim 14, wherein the lower plate (26) of each assembly (10, 12) comprises a central plate portion (28) arranged horizontally and an inner plate portion (30) arranged vertically, and the inner plate portion (30) is closer to a central longitudinal axis (X1) of the vehicle (1) than the central plate portion (28) is.
